# FASCICULE DE BREVET EUROPEEN

(11) **EP 2 859 125 B1**
(45) Date de publication et mention de la délivrance du brevet: **29.08.2018**
(21) Numéro de dépôt: 13727949.3
(22) Date de dépôt: 12.06.2013
(51) Int. Cl.: C21B 3/08, C04B 5/00, C21C 5/36

(54) **PROCÉDÉ DE TRAITEMENT DE LAITIER D'ACIÉRIE DE CONVERSION**
VERFAHREN ZUR VERARBEITUNG VON SAUERSTOFFAUSBLASKONVERTERSCHLACKE
METHOD OF PROCESSING BASIC OXYGEN FURNACE SLAG

(30) Priorité: 12.06.2012 FR 1255477
(43) Date de publication de la demande: 15.04.2015
(73) Titulaire: Centre National de la Recherche Scientifique (C.N.R.S.), 75016 Paris (FR)
(72) Inventeur: POIRIER, Jacques, F-45750 St Pryve (FR); THEVENIN, Guillaume, F-45100 Orleans (FR); PRIGENT, Pascal, F-45370 Jouy Le Potier (FR)
(74) Mandataire: Lavoix
(86) Numéro de dépôt international: PCT/EP2013/062142
(87) Numéro de publication internationale: WO 2013/186257

(56) Documents cités:
- FR-A1- 2 348 272
- FR-A1- 2 820 420
- GB-A- 1 136 396

## Description

La présente invention concerne un procédé de traitement de laitier d'aciérie de conversion.

Le laitier d'aciérie de conversion (LAC), également appelé « laitier » ci-après, est, en quantité, le second coproduit issu du processus sidérurgique, avec une production d'environ 110 kg par tonne d'acier. Les gisements de laitiers représentent des millions de tonnes sur le territoire européen, immédiatement accessibles aux usines, et la production annuelle nominale atteint 1,2 Mt en France, dont plus de 50% restent sans valorisation. Les gisements de laitiers de convertisseurs représentent des millions de tonnes sur le territoire européen, immédiatement accessibles dont plus de 50% restent sans valorisation.

Après la transformation de la fonte en acier dans le convertisseur, le laitier est en général versé dans de larges fosses où il est refroidi par un arrosage d'eau. Le laitier solidifié est alors transporté jusqu'aux installations de criblages pour l'obtention de produits calibrés. Ces installations sont équipées de systèmes de tri magnétique, afin de récupérer le maximum de particules métalliques piégées dans le laitier lors de la coulée.

A la suite de ce traitement, le laitier dé-métallisé et criblé est typiquement revalorisé dans le génie civil comme granulat de faible valeur destiné aux remblais et routes non recouvertes. En effet, le laitier présente une instabilité volumique due à sa concentration en chaux libre, qui est imposée par le processus de production de l'acier. Les volumes vendus sont en général inférieurs aux volumes produits, entrainant la constitution de stocks internes. Avec les années, les stocks actuels en France atteignent plusieurs millions de tonnes. La valorisation du laitier est donc un enjeu économique et environnemental.

Le laitier comprend de 40 à 60% de chaux, combinée à des silicates et donc non carbonatée. Par ailleurs, le laitier contient toujours des matières de valeur pour le processus sidérurgique. En Europe, le laitier contient en moyenne de 15 à 25% massique de fer élémentaire réparti entre fer métallique (1-5%), FeO (60-70%) et Fe₂O₃ (25-30%). Ce fer pourrait être valorisé comme matière première pour la production d'acier, ce qui entrainerait des économies de minerai de fer et de calcaire, utilisé comme ajusteur de composition pour le laitier de haut-fourneau (HF), ainsi qu'une diminution de l'énergie et de l'empreinte CO₂ du processus sidérurgique. De plus, le contexte actuel de forte tension sur les matières premières (disponibilité, qualité, prix) entraîne le besoin de rechercher des sources alternatives aux minerais d'aciérie en sidérurgie. La revalorisation de phases riches en fer du laitier en sidérurgie serait donc très intéressante.

Le laitier est essentiellement composé de cristaux multiphasés de petite taille (taille moyenne de l'ordre de 20 µm, la taille des plus grands cristaux étant inférieure à 100 µm), avec des phases riches en fer (ferrite de chaux et de magnésie) d'une part, et des phases riches en silice (silicates de chaux), dans des proportions similaires. Ces deux types de phase comprennent toutes les deux du phosphore (généralement sous forme d'oxyde de phosphore P₂O₅) avec une répartition aléatoire. Typiquement, le laitier comprend de l'ordre de 1 à 3% massique de P₂O₅.

Il existe deux problèmes à surmonter pour pouvoir revaloriser le laitier comme produit de départ en sidérurgie : d'une part la séparation des phases minérales du laitier pour isoler les phases riches en fer, et d'autre part la présence de phosphore dans les phases minérales du laitier, le phosphore étant indésirable en sidérurgie.

Tout d'abord, la revalorisation du laitier nécessite la séparation des phases minérales qu'il comprend. Bien sûr, les technologies actuelles de broyage permettent de broyer le laitier, mais le broyage n'est pas sélectif car il ne permet pas de séparer ultérieurement les phases riches en fer (ferrite de chaux) des phases riches en silice (silicate de chaux).

Par ailleurs, un des principaux rôles du laitier de convertisseur dans l'élaboration de l'acier est l'extraction du phosphore de la fonte. Dans le cas d'un recyclage direct du laitier, le phosphore retiré au convertisseur serait réinjecté dans le haut fourneau, ce qui limite fortement l'intérêt de cette pratique à l'heure actuelle, en particulier dans le cadre de productions privilégiant les aciers en teneur ultra-basse en phosphore.

Ces inconvénients expliquent le faible taux de recyclage du laitier en Europe, qui varie de 40 à 0%. Le laitier doit alors être valorisé dans des marchés en dehors de la sidérurgie. L'accès à ces marchés est à nouveau très dépendant des conditions locales, notamment du fait de la faible valeur ajoutée du laitier et des coûts de transport. De nombreux projets de recherches dans le monde entier ont étudié de nouvelles voies de valorisation pour le laitier mais dans la plupart des cas, la valeur du fer est perdue, voire même dilue la valeur des autres minéraux présents.

Jusqu'à maintenant, toutes les techniques destinées à séparer les minéraux présents dans le laitier d'aciérie de conversion ont été basées sur des processus pyrométallurgiques. Les méthodes existantes comportent deux inconvénients majeurs :
- tout d'abord, ces méthodes nécessitent la re-fusion du laitier et la réduction des oxydes de fer par du carbone, ce qui correspond à un coût énergétique et à un impact sur les émissions de CO₂ considérables ;
- ensuite, le phosphore présent dans le laitier est également réduit et repasse dans la fonte, donnant ainsi une fonte phosphoreuse inutilisable dans les processus sidérurgiques actuels.
Par exemple, un des procédés les plus utilisés pour le traitement du laitier est le procédé ZEWA (ZEro WAste - Siemens-Voest Alpine Industries), qui comprend la re-fusion du laitier à 1600°C puis l'ajout de carbone comme système réducteur pour réduire l'oxyde de fer en fer (Borlée et al., La revue de métallurgie-CIT janvier 2005, p. 59-67). Ce procédé génère des émissions de CO₂ que l'on cherche justement à éviter actuellement. De plus, lors du traitement, le P₂O₅ présent dans le laitier est également réduit en phosphore et migre majoritairement (plus de 80%) vers la phase enrichie en fer, ce qui est préjudiciable pour une utilisation de cette phase en sidérurgie, comme expliqué ci-dessus. Une étape ultérieure de dé-phosphoration est donc nécessaire.

Il existe donc un besoin de fournir un procédé alternatif de traitement des laitiers ne présentant pas ces inconvénients. En particulier, le développement d'un procédé de traitement du laitier d'aciérie de conversion qui permette d'isoler des phases riches en fer du laitier peu contaminées par du phosphore pour pouvoir les réutiliser comme matière première en sidérurgie.

A cet effet, l'invention a pour objet un procédé de traitement de laitier d'aciérie de conversion comprenant les étapes de :
a) refroidissement d'un laitier d'aciérie de conversion d'une température initiale Tᵢ comprise entre 1500 et 1600°C à une température de palier Tₚ comprise entre 1200 et 1400°C, étant entendu que :
   - la vitesse moyenne de refroidissement de la température initiale Tᵢ à la température de palier Tₚ est inférieure ou égale à 10°C par minute, et
   - la vitesse maximale de refroidissement de la température initiale Tᵢ à la température de palier Tₚ est inférieure à 20°C par minute, puis
b) éventuellement maintien du laitier d'aciérie de conversion à la température de palier Tₚ pendant 1 à 48 heures, puis
c) refroidissement du laitier d'aciérie de conversion de la température de palier Tₚ à une température finale T_{f} inférieure à 1200°C,
ce par quoi se forment des phases à base de silicate de chaux de taille moyenne supérieure à 30 µm et des phases à base de ferrite de chaux,
d) broyage du laitier d'aciérie de conversion obtenu après refroidissement,
c) séparation des phases à base de silicate de chaux et des phases à base de ferrite de chaux.

### • Définitions

Par « vitesse moyenne de refroidissement de la température initiale Tᵢ à la température de palier Tₚ», on entend le rapport entre la différence entre Tᵢ et Tₚ en °C sur le temps en minute pour que le laitier passe de la température initiale Tᵢ à la température de palier Tₚ.

Par « vitesse maximale de refroidissement de la température initiale Tᵢ à la température de palier Tₚ est inférieure à 20°C par minute», on entend qu'à tout instant pendant le refroidissement de Tᵢ à Tₚ, la vitesse de refroidissement n'excède pas 20°C par minute.

Au sens de la présente demande, toute vitesse de refroidissement (vitesse moyenne de refroidissement et vitesse maximale de refroidissement) s'entend comme étant une moyenne de toutes les vitesses de refroidissement à tous les points du laitier.

En effet, dans certains modes de réalisation, et en particulier lorsque les masses de laitier utilisées dans le procédé selon l'invention sont faibles, la température est homogène dans tout le laitier soumis au procédé et, à tout instant, les vitesses de refroidissement du laitier sont les mêmes en tout point du laitier.

Par contre, lorsque des masses importantes de laitier sont utilisées dans le procédé selon l'invention, ce qui est généralement le cas lors d'une application industrielle, à un instant t, la température peut être différente d'un point à l'autre du laitier et les vitesses de refroidissement peuvent être différentes d'un point à l'autre du laitier. A titre illustratif, dans le mode de réalisation (décrit ci-après) dans lequel le procédé est exempt d'étape b) et dans lequel les étapes a) et c) sont réalisées en mettant le laitier sorti du convertisseur dans un récipient dont les parois sont isolantes à la chaleur, il est évident que le laitier au coeur du récipient à une température plus élevée que le laitier proche des parois du récipient, et que la vitesse de refroidissement du laitier proche des parois du récipient est plus élevée que celle du laitier au coeur du récipient. Ainsi, au sens de la présente demande, toute vitesse de refroidissement (vitesse moyenne de refroidissement et vitesse maximale de refroidissement) s'entend comme étant une moyenne de toutes les vitesses de refroidissement de tous les points du laitier.

Au sens de la présente demande, par « phases à base de silicate de chaux », on entend une phase minérale comprenant majoritairement du silicate de chaux, mais pouvant comprendre d'autres composés chimiques. Par « majoritairement », on entend que la proportion massique en silicate de chaux est supérieure à celle de n'importe quel autre composé chimique dans cette phase. Typiquement, le procédé selon l'invention permet de préparer des phases à base de silicate de chaux comprenant plus de 15% massique, voire plus de 30% massique, de SiO₂ et plus de 50 % massique, voire plus de 60% massique, de CaO. Les phases et minéraux à base de silicate de chaux obtenus par le procédé selon l'invention sont généralement des phases alite (C3S - (CaO)₃(SiO₂)) et/ou belite (C2S - (CaO)₂(SiO₂)), majoritairement des phases C2S (car généralement, les phases C3S qui se forment lors du refroidissement se décomposent en phases C2S et en chaux à des températures inférieures).

De même, par « phases à base de ferrite de chaux», on entend une phase minérale comprenant majoritairement de la ferrite de chaux de chaux, mais pouvant comprendre d'autres composés chimiques. Par « majoritairement », on entend que la proportion massique en ferrite de chaux est supérieure à celle de n'importe quel autre composé chimique dans cette phase. Typiquement, le procédé selon l'invention permet de préparer des phases à base de ferrite de chaux comprenant plus de 30% massique, voire plus de 40% massique, de CaO et plus de 30% massique, voire plus de 38% massique, de Fe₂O₃.

Les proportions massiques en composé chimique de chaque phase peuvent par exemple être déterminées par analyse élémentaire ou bien par spectrométrie en énergie (Energy dispersive spectrometry EDS).

Les phases minérales et minéraux obtenus par le procédé selon l'invention ne sont généralement pas sphériques. Les phases à base de silicate de chaux ont généralement une forme « ovale » ou dendritique. Ainsi, dans la présente demande, les tailles de phases minérales ou de minéraux sont des tailles moyennes. Les tailles moyennes des phases minérales sont généralement mesurées par une mesure dimensionnelle statistique, obtenue à partir d'images micrographiques en deux dimensions (2D) (des plans de coupe) comportant une échelle de mesure. La mesure de la taille moyenne des phases minérales est d'autant plus précise :
- qu'elle est réalisée sur un grand nombre d'images et donc de grains (c'est une mesure statistique qui dépend de l'échantillonnage et du nombre de mesures),
- que le contraste entre les phases observées est important, et
- que les phases sont séparées et distinctes.
Les logiciels d'analyse d'image en 2D (par exemple ImageJ) permettent de traiter un grand nombre de données et de déterminer statistiquement les grandeurs suivantes : surface, taille, nombre - en valeur moyenne et écart type. L'avantage de ces traitements est la rapidité et la représentativité.

### • Etapes a) à c) : Refroidissement

Le procédé selon l'invention comprend des étapes a) et c) de refroidissement, et éventuellement une étape b) correspondant à un maintien à un palier de température à la température de palier Tₚ.

Les étapes a) à c) du procédé selon l'invention permettent de refroidir le laitier d'une température initiale Tᵢ comprise entre 1500 et 1600°C à une température finale T_{f} inférieure à 1200°C.

La température initiale Tᵢ, comprise entre 1500 et 1600°C, correspond à la température à la sortie d'un convertisseur. Avantageusement, le procédé selon l'invention peut être mis en oeuvre juste après formation de l'acier. Le laitier est alors déjà à une température comprise entre 1500 et 1600°C, et le procédé ne nécessite donc pas nécessairement d'étape préalable de chauffage du laitier à cette température. Par contre, lorsque le procédé est appliqué à du laitier initialement à une autre température (par exemple à un laitier stocké, qui est à température ambiante), une étape préalable de chauffage du laitier à la température initiale comprise entre 1500 et 1600°C est nécessaire.

La température finale T_{f} est une température inférieure à 1200°C. Typiquement, la température finale T_{f} est la température ambiante (de l'ordre de 25°C). Dans le procédé selon l'invention, la vitesse de refroidissement entre la température de palier et la température finale T_{f} est quelconque. En effet, l'invention repose sur la découverte que c'est le contrôle des vitesses de refroidissement entre la température initiale Tᵢ et la température de palier Tₚ qui permet non seulement de former des phases à base de silicate de chaux de taille moyenne supérieure à 30 µm et des phases à base de ferrite de chaux qui sont susceptibles d'être séparées les unes des autres par broyage, mais aussi que l'oxyde de phosphore présent dans le laitier migre très majoritairement dans les phases à base de silicate de chaux et non dans les phases à base de ferrite de chaux.

Ainsi, les étapes a), éventuelle b) et c) du procédé selon l'invention permettent avantageusement d'obtenir des phases minérales distinctes :
- des phases à base de ferrite de chaux,
- des phases à base de silicate de chaux (principalement C2S) avec des tailles moyennes supérieures à 30 µm, de préférence supérieures à 50 µm, notamment comprises entre 30 µm et 100 µm, typiquement entre 50 µm et 100 µm. Ces tailles sont particulièrement adaptées pour que les phases à base de silicate de chaux et à base de ferrite de chaux puissent être séparées après broyage.
Bien que les phases à base de ferrite de chaux et à base de silicate de chaux soient les phases majoritaires, le laitier refroidi obtenu à la fin de l'étape c) comprend d'autres phases, par exemple des phases à base de ferrite de magnésie, de magnésie.

Sans vouloir être liés à une théorie particulière, la formation de phases à base de ferrite de chaux d'une part et de phases à base de silicate de chaux de taille supérieure à 30 µm d'autre part dans les conditions spécifiques des étape a) à c) pourrait s'expliquer comme suit. A la température initiale comprise entre 1500 et 1600°C, le milieu est essentiellement une phase liquide. Au sein de cette phase liquide, des cristaux de C3S apparaitraient éventuellement vers 1500°C, et des cristaux de C2S apparaitraient vers 1450°C, pour former la phase à base de silicate de chaux. Les cristaux de la phase à base de ferrite de chaux apparaîtraient à une température de l'ordre de 1300°C, jusqu'à environ 1050°C. La vitesse moyenne de refroidissement lente de l'étape a) entre Tᵢ et Tₚ (c'est-à-dire inférieure ou égale à 10°C/min) favoriserait donc l'apparition et la croissance des cristaux à base de silicate de chaux, et donc l'obtention de phases à base de silicate de chaux de taille supérieure à 30 µm.

En outre, les étapes a), éventuelle b) et c) permettent d'obtenir des phases à base de ferrite de chaux comprenant très peu d'oxyde de phosphore. Plus précisément, la proportion massique en oxyde de phosphore dans les phases à base de ferrite de chaux est en dessous de la limite de détection du phosphore par microanalyse EDS (Energy dispersive Xray analysis), soit inférieure à 0,5% massique.

Une faible teneur en phosphore des phases à base de ferrite de chaux est une condition nécessaire pour une valorisation sidérurgique des phases à base de ferrite de chaux issues du procédé selon l'invention. Avantageusement, le procédé selon l'invention ne nécessite donc pas d'étape ultérieure de dé-phosphoration de la phase à base de ferrite de chaux avant leur réutilisation en sidérurgie.

En effet, lors des étapes a), éventuelle b) et c), l'oxyde de phosphore migre principalement dans les phases à base de silicates de chaux. D'après les résultats par résonance magnétique nucléaire (RMN) du solide et par diffraction aux rayons X obtenus, au cours de la solidification de la phase à base de silicate de chaux, le phosphore, sous forme de phosphate de chaux, s'associe aux phases C2S. Généralement, les phases à base de silicates de chaux obtenues par le procédé comprennent entre 3 et 7% massique de P₂O₅.

Dans chaque phase, les proportions massiques en P₂O₅ peuvent par exemple être déterminées par analyse élémentaire ou bien par spectrométrie en énergie (Energy dispersive spectrometry EDS).

Dans un mode de réalisation du procédé selon l'invention, dans l'étape a), la vitesse moyenne de refroidissement de la température initiale Tᵢ à la température de palier Tₚ est inférieure à 5°C par minute. La vitesse moyenne de refroidissement de la température initiale Tᵢ à la température de palier Tₚ peut notamment être de l'ordre de 1°C par minute.

De préférence, dans l'étape a) du procédé selon l'invention, la vitesse maximale de refroidissement de la température initiale Tᵢ à la température de palier Tₚ est inférieure à 15°C par minute.

De telles vitesses moyennes et maximales de refroidissement sont en effet particulièrement adaptées pour obtenir des phases à base de silicate de chaux de grande taille, et ainsi pour faciliter la séparation ultérieure des phases à base de silicate de chaux et à base de ferrite de chaux.

Le procédé selon l'invention comprend ou non une étape b) correspondant à un maintien du laitier à un palier de température à une température de palier Tₚ comprise entre 1200 et 1400°C, de préférence de l'ordre de 1300°C.

Selon une première alternative, le procédé selon l'invention comprend l'étape b) de maintien du laitier d'aciérie de conversion à la température de palier Tₚ pendant 1 à 48 heures, notamment de 12 à 36 heures, en particulier de l'ordre de 24 heures.

La présence de l'étape b) permet avantageusement d'obtenir des phases à base de silicate de chaux de plus grande taille, et ainsi de faciliter la séparation ultérieure des phases à base de silicate de chaux et à base de ferrite de chaux. Sans vouloir être liés à une théorie particulière, cette étape b) de maintien du laitier à la température de palier Tₚ, c'est-à-dire à une température supérieure ou de l'ordre de la température d'apparition des cristaux de la phase à base de ferrite de chaux, permettrait de favoriser l'apparition et la croissance des cristaux à base de silicate de chaux sans que celles-ci soient en compétition avec la formation des cristaux à base de ferrite de chaux. Les phases à base de silicate de chaux auraient donc une plus grande taille.

L'augmentation de la durée du palier (durée de l'étape b)) permet généralement d'augmenter la taille des phases à base de silicate de chaux. Une durée de palier de l'ordre de 24 heures est préférée.

Cela étant, une étape de maintien du laitier à une température de palier peut être difficile et coûteuse à mettre en oeuvre à l'échelle industrielle. Typiquement, pour mettre en oeuvre le procédé à l'échelle industrielle, les étapes a) à c) de refroidissement sont réalisées :
- en versant le laitier (généralement directement issu du convertisseur) à la température initiale Tᵢ dans un récipient qui peut avoir été chauffé préalablement à la température initiale Tᵢ, par exemple à l'aide de brûleurs, et dont les parois sont isolantes, par exemple avec des parois comprenant une couche en matériaux réfractaires isolants, telles que :
   - des parois en béton réfractaire isolant ou en pisé réfractaire isolant,
   - des parois métalliques (par exemple en fonte) isolées thermiquement de l'extérieur par une couche en matériau réfractaire isolant ;
- puis en laissant le laitier refroidir, avec des vitesses moyennes et maximales de refroidissement respectant celles définies dans l'étape a) du procédé selon l'invention.
Typiquement, pour minimiser les coûts, après avoir versé le laitier, le récipient le contenant n'est ni chauffé ni refroidi (excepté bien sûr le contact des parois externes du récipient avec l'air ambiant). Dans ces conditions, une étape de maintien du laitier à une température de palier est donc généralement évitée.

Ainsi, selon une seconde alternative, le procédé selon l'invention est exempt d'étape b). Dans un mode de réalisation préféré de cette alternative, la température de palier est de l'ordre de 1200°C. Dans ce mode de réalisation, le procédé selon l'invention comprend alors les étapes de :
α) refroidissement d'un laitier d'aciérie de conversion d'une température initiale Tᵢ comprise entre 1500 et 1600°C à une température finale T_{f} inférieure à 1200°C, étant entendu que:
   - la vitesse moyenne de refroidissement de la température initiale Tᵢ à 1200°C est inférieure ou égale à 10°C par minute, et
   - la vitesse maximale de refroidissement de la température initiale à 1200°C est inférieure à 20°C par minute,
   ce par quoi se forment des phases à base de silicate de chaux de taille moyenne supérieure à 30 µm et des phases à base de ferrite de chaux,
d) broyage du laitier obtenu après refroidissement,
e) séparation des phases à base de silicate de chaux et des phases à base de ferrite de chaux.
L'étape α) correspond aux étapes a) et c) subséquentes définies ci-dessus.

De plus, le procédé selon l'invention peut également comprendre préalablement à l'étape a), une étape a₀) de maintien du laitier d'aciérie de conversion à la température initiale Tᵢ pendant 1 à 48 heures, notamment de 1 à 24 heures, par exemple de l'ordre de 5 heures.

Par ailleurs, le procédé selon l'invention peut également comprendre préalablement à l'étape a), ou pendant l'une des étapes a), b) (si elle est présente) ou c), une étape a₁) d'ajout d'un matériau à base de silice au laitier. Le matériau à base de silice est typiquement de la silice ou du calcin. Généralement, le matériau à base de silice est ajouté dans des proportions massiques inférieures ou égales à 10% en poids, par exemple de l'ordre de 5% en poids, par rapport au poids de laitier d'aciérie de conversion. Le matériau à base de silice est ajouté préalablement l'étape a), ou pendant l'une des étapes a), b) (si elle est présente) ou c), de préférence préalablement l'étape a), ou pendant l'une des étapes a) ou b) (si elle est présente). Il est de préférence ajouté à une température comprise entre la température initiale et 1200°C,. Lorsque l'étape b) est absente, l'étape a₁) peut être réalisée préalablement ou pendant l'étape α) définie ci-dessus.

L'ajout d'un matériau à base de silice permet avantageusement d'augmenter la taille des phases à base de silicate de chaux. Il est ainsi possible de réduire la durée du refroidissement (durée des étapes a), éventuelle b) et c)). de l'étape a) et/ou d'éviter l'étape b) de palier de température, tout en obtenant des tailles de phases à base de silicate de chaux similaires. Ainsi, ce mode de réalisation est particulièrement adapté à une application industrielle, où la mise en oeuvre de l'étape b) (palier de température) est complexe.

Des proportions inférieures ou égales à 10% massique, par exemple de 5% massique, sont particulièrement adaptées pour augmenter la taille des phases à base de silicate de chaux. Au-delà de 10% massique, on peut observer l'apparition d'une multitude de phases à base de silicate de chaux de faible taille moyenne, qui rendent difficile la séparation ultérieure des phases à base de silicate de chaux et des phases à base de ferrite de chaux.

Sans vouloir être liés à une théorie particulière, au sein de la phase liquide présente à la température initiale comprise entre 1500 et 1600°C, la phase minérale à base de silicate de chaux se formerait en premier. L'apparition et la croissance des cristaux de cette phase minérale dépendraient notamment de la vitesse de refroidissement du milieu, mais aussi de la composition chimique du milieu, et en particulier de sa teneur en silice. L'ajout d'un matériau à base de silice, conduisant à l'augmentation de la teneur en silice du milieu, permettrait de favoriser l'apparition et la croissance des cristaux de la phase à base de silicate de chaux, et donc d'obtenir des cristaux de taille appropriée plus rapidement. Ainsi, selon la composition du laitier mis en oeuvre dans le procédé (et en particulier de sa teneur initiale en silice), l'homme du métier pourra adapter la proportion massique de silice à ajouter (dans des proportions inférieures ou égales à 10% massique) pour obtenir des cristaux de taille appropriée plus rapidement.

Outre l'éventuel ajout d'un matériau à base de silice, le procédé selon l'invention ne nécessite avantageusement pas l'ajout de composants chimiques au laitier. En particulier, le procédé est exempt d'étape d'ajout d'agent réducteur (par exemple du carbone), ce qui est un avantage par rapport à la plupart des procédés de traitement de laitier connus, par exemple le procédé ZEWA.

Bien sûr, les modes de réalisation décrits ci-dessus peuvent être combinés les uns avec les autres.

Par exemple, le procédé selon l'invention peut comprendre les étapes de:
a₀) maintien d'un laitier d'aciérie de conversion à une température initiale Tᵢ comprise entre 1500 et 1600°C pendant 1 à 48 heures, puis
   a) refroidissement du laitier d'aciérie de conversion de la température initiale Tᵢ à une température de palier Tₚ comprise entre 1200 et 1400°C, étant entendu que :
      - la vitesse moyenne de refroidissement de la température initiale Tᵢ à la température de palier Tₚ est inférieure à 5°C par minute, de préférence de l'ordre de 1°C par minute, et
      - la vitesse maximale de refroidissement de la température initiale Tᵢ à la température de palier Tₚ est inférieure à 20°C par minute, de préférence inférieure à 15°C par minute, puis
   b) éventuellement maintien du laitier d'aciérie de conversion à la température de palier Tₚ pendant 1 à 48 heures, puis
   c) refroidissement du laitier d'aciérie de conversion de la température de palier Tₚ à une température finale T_{f} inférieure à 1200°C,
a₁) ajout d'un matériau à base de silice au laitier préalablement à l'étape a), ou pendant l'une des étapes a), b) ou c),
suivies des étapes d) et e).

Le procédé selon l'invention peut notamment comprendre les étapes de :
a₀) maintien d'un laitier d'aciérie de conversion à une température initiale Tᵢ comprise entre 1500 et 1600°C de 4 à 6 heures, par exemple de l'ordre de 5 heures, puis
   a) refroidissement du laitier d'aciérie de conversion d'une température initiale Tᵢ à une température de palier Tₚ de l'ordre de 1300°C, étant entendu que :
      - la vitesse moyenne de refroidissement de la température initiale Tᵢ à la température de palier Tₚ est inférieure à 5°C par minute, de préférence de l'ordre de 1°C par minute, et
      - la vitesse maximale de refroidissement de la température initiale Tᵢ à la température de palier Tₚ est inférieure à 20°C par minute, de préférence inférieure à 15°C par minute, puis
   b) éventuellement maintien du laitier d'aciérie de conversion à la température de palier Tₚ pendant 1 à 48 heures, puis
   c) refroidissement du laitier d'aciérie de conversion de la température de palier Tₚ à une température finale T_{f} inférieure à 1200°C,
a₁) ajout d'un matériau à base de silice au laitier d'aciérie de conversion dans des proportions massiques inférieures ou égales à 10% en poids par rapport au poids de laitier d'aciérie de conversion, préalablement à l'étape a), ou pendant l'une des étapes a), b) ou c),
suivies des étapes d) et e).

Le procédé selon l'invention peut notamment comprendre les étapes de :
α) refroidissement d'un laitier d'aciérie de conversion d'une température initiale Tᵢ comprise entre 1500 et 1600°C à une température finale T_{f} inférieure à 1200°C, étant entendu que :
   - la vitesse moyenne de refroidissement de la température initiale Tᵢ à 1200°C est inférieure ou égale à 10°C par minute, et
   - la vitesse maximale de refroidissement de la température initiale à 1200°C est inférieure à 20°C par minute, de préférence inférieure à 15°C par minute,
a₁) ajout d'un matériau à base de silice au laitier préalablement à l'étape α), ou pendant l'étape α),
suivies des étapes d) et e).

### • Etapes d) et e) : Broyage et séparation

Le procédé selon l'invention comprend une étape de broyage du laitier refroidi obtenu à la fin des étapes a) à c). Comme les phases à base de silicate de chaux du laitier obtenu à la fin des étapes a) à c) ont une taille supérieure à 30 µm, de préférence supérieure à 50 µm, le broyage permet de dissocier les phases minérales du laitier, et en particulier les phases à base de silicate de chaux des phases à base de ferrite de chaux.

Ce broyage peut être effectué par toute méthode connue, notamment par concassage étagé (par exemple à marteaux), ou par broyage séquentiel (par exemple broyage à galets, à mâchoires ou à cône.

Le broyage permet la libération des phases minérales à base de silicate de chaux et des phases à base de ferrite de chaux. L'homme du métier sait quelle méthode et quelles conditions utiliser pour obtenir des minéraux (issus des phases minérales du laitier) ayant la granulométrie désirée.

A la fin de l'étape d), on obtient un mélange de minéraux comprenant des minéraux à base de silicate de chaux (issus des phases à base de silicate de chaux) et des minéraux à base de ferrite de chaux (issus des phases à base de ferrite de chaux). Le procédé comprend également une étape e) de séparation des phases à base de silicate de chaux et des phases à base de ferrite de chaux. Cette séparation peut être magnétique, par lixiviation ou par flottation. Une séparation magnétique est préférée car très facile à mettre en oeuvre avec un aimant qui attire les phases à base de ferrite de chaux.

Les étapes d) et e) peuvent éventuellement être répétées dans le procédé. Par exemple, le procédé peut comprendre une première étape d) de broyage par concassage étagé (par exemple à marteaux), suivie d'une première étape e) de séparation magnétique, suivie d'une seconde étape d) de broyage séquentiel (par exemple broyage à galets, à mâchoires, à cône), suivie d'une seconde étape e) de séparation magnétique.

Bien sûr, généralement, le procédé comprend, après l'étape e), une étape f) de récupération des phases à base de ferrite de chaux et/ou des phases à base de silicate de chaux.

### • Utilisation des phases à base de ferrite de chaux et à base de silicate de chaux obtenues par le procédé

Comme expliqué ci-dessus, les phases à base de ferrite de chaux peuvent avantageusement être utilisées comme matière première en sidérurgie, sans nécessiter d'étape préalable de dé-phosphorisation.

Les minéraux à base de silicate de chaux peuvent également être valorisées, notamment comme :
1) liant hydraulique routier (LHR) ou comme additif pour les bétons
   Le laitier d'aciérie brut est défini comme constituant possible des LHR dans la norme EN-13282 (2010).
   Pour les bétons, les performances à atteindre sont listées dans la norme EN-206 (2004). Le laitier agit alors en remplacement des ciments classiques ayant un coût et un impact CO₂ élevés.
2) engrais phosphatés.
   Le laitier brut est considéré comme un engrais NPK 0-3-0, ce qui est la classe la plus basse. Il est également éligible comme engrais biologique selon le CE 889/2008 sur les engrais et amendement de sols.
   Comme expliqué ci-dessus, dans le procédé selon l'invention, le phosphore du laitier migre très majoritairement dans les minéraux à base de silicate de chaux issus du procédé selon l'invention. Les minéraux à base de silicate de chaux issus du procédé comprennent donc une proportion importante de phosphore (sous forme d'oxyde de phosphore P₂O₅), ce qui est avantageux pour leur utilisation en tant qu'engrais phosphaté.
3) carbonate ultra-fin.
   Les minéraux à base de silicate de chaux issus du procédé pourraient être utilisés comme carbonates ultra-fins utiles comme compléments micro-granulométriques pour des formulations de béton. Les performances à atteindre sont définies dans la norme EN-206 (2004).

Le procédé selon l'invention est illustré dans les figures annexées et dans les exemples qui suivent.

### FIGURES

Les figures 1 à 19 sont des micrographies du laitier obtenu après les étapes a) à c) de refroidissement dans les conditions des essais 1 à 11. Les figures 7 à 10 et 16 à 19 précisent les proportions massiques en éléments dans différentes phases du laitier refroidi.
La figure 20 représente les tailles des phases à base de silicate de chaux, avec une unité arbitraire où la valeur 1 correspond à la taille moyenne des phases à base de silicate de chaux de l'essai 1, en fonction de la température de palier Tₚ, aux deux vitesses de refroidissement testées (1 ou 10°C/min) avec des durées de l'étape b) (palier) de 1, 5 ou 24 heures.
La figure 21 est une micrographie du laitier refroidi obtenu après les étapes a) à c) de refroidissement dans les conditions de l'essai 9 et après broyage dans un mortier.

### EXEMPLES

Dans les exemples qui suivent, du laitier brut provenant de l'aciérie intégrée de conversion de Fos sur Mer (ArcelorMittal).
a été utilisé comme produit de départ. Le laitier a été placé dans un creuset en platine, qui a ensuite été installé dans un four à cloche circulaire Nabatherm. Tous les échantillons ont été chauffés à une température initiale Tᵢ de 1600°C ou de 1500°C (chauffage à partir de 20°C en 5h20 lorsque Tᵢ est 1600°C ou en 5h lorsque Tᵢ est 1500°C), puis cette température a été maintenue 5 heures (étape a₀)), avant refroidissement dans les conditions décrites ci-après dans les exemples (étapes a), b) et c)). Dans les exemples réalisés, la vitesse de refroidissement était imposée par le four et était constante à tout instant. La vitesse moyenne correspond donc à la vitesse réelle de refroidissement à tout instant.

Pour tous les essais, après chaque refroidissement, l'échantillon solidifié a été extrait du creuset en platine. Une partie a été récupérée et broyée au mortier afin d'être analysée en diffraction des rayons X avec un appareil X : X-ray Bruker D8 Advance, les plus gros morceaux ont été enrobés et polis pour réaliser l'observation au microscope optique et au microscope électronique à balayage FEGSEM-Hitachi S 4500 (avec également des analyses chimiques par EDS avec un appareil OXFORD, ISIS 300, Si (Li) detector). L'analyse des images obtenues en micrographie a été réalisée avec le logiciel ImageJ (origine National Institute of Heath(USA) - programme d'analyse d'image) pour déterminer les tailles des phases à base de silicate de chaux.

Pour étudier l'impact de conditions du procédé sur la taille moyenne des phases à base de silicate de chaux :
- deux températures initiales Tᵢ différentes de 1600°C ou de 1500°C ont été testées,
- trois températures de palier Tₚ différentes ont été testées :
   - 1400°C, qui correspond au domaine de cristallisation du C3S et du C2S,
   - 1300°C qui correspond au domaine de formation du C2S et décomposition du C3S en C2S et en chaux, et
   - 1200°C qui correspond approximativement à la fin de cristallisation des silicates de chaux,
- trois durées du palier de température de l'étape b) ont été testées : 1heure, 5 heures et 24 heures, et
- deux vitesses moyennes de refroidissement ont été testées : 1°C/min et 10°C/min,
- l'ajout ou non de silice avant le traitement thermique (avant l'étape a), à des proportions massiques de 5% ou 10% par rapport au poids de laitier a été testée.

Ainsi, les essais suivants ont été réalisés :

**Tableau 1 : Conditions testées pour les étapes a) à c), figures correspondantes et taille moyenne des phases à base de silicate de chaux obtenues.**

| essai | 1 | 2 | 3 | 4 | 5 | 6 | 7 | 8 | 9 | 10 | 11 | 12 |
|---|---|---|---|---|---|---|---|---|---|---|---|---|
| silice | - | - | - | - | - | - | - | - | 5% | 5% | 10% | 5% |
| Tᵢ(°C) | 1600 | | | | | | | | | | | 1500 |
| Tₚ(°C) | 1200 | | 1300 | | | | 1400 | | 1300 | | | |
| Durée à Tᵢ | 5h | 5h | 5h | 5h | 5h | 5h | 5h | 5h | 5h | 5h | 5h | 5h |
| durée Tᵢ à Tₚ | 6h40 | 0h40 | 5h | 5h | 5h | 0h30 | 3h20 | 0h20 | 5h | 5h | 5h | 3h20 |
| Durée à Tₚ | 1h | 1h | 1h | 5h | 24h | 1h | 1h | 1h | 5h | 10h | 5h | 5h |
| Durée Tₚ à 20°C | 2h10 | 2h10 | 2h10 | 2h10 | 2h10 | 2h10 | 2h10 | 2h10 | 2h10 | 2h10 | 2h10 | 2h10 |
| Vitesse de refroidissement (°C /min) entre Tᵢ et Tₚ | 1 | 10 | 1 | 1 | 1 | 10 | 1 | 10 | 1 | 1 | 1 | 1 |
| Taille moyenne (µm) des phases à base de C2S | 63 | 30 | 63 | 61 | 86 | 39 | 53 | 34 | 77 | 78 | 81 | 78 |
| figure | 2 8 | 1 | 4 7 | 11 | 9 12 | 3 | 6 10 | 5 | 13 16 | 14 17 | 15 18 | 19 |

### • Influence de la vitesse de refroidissement entre Tᵢ et Tₚ sur la taille des phases à base de silicate de chaux

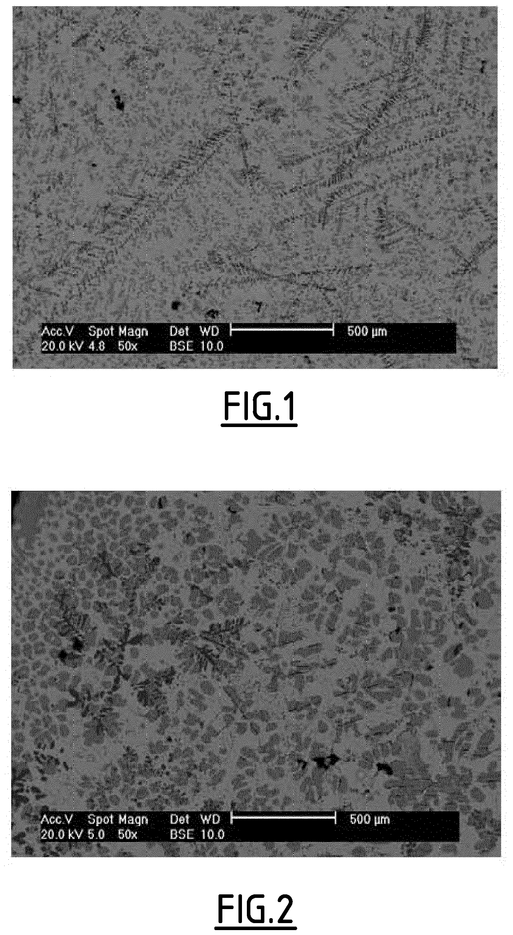

La comparaison respectivement des figures 1 avec la 2, 3 avec la 4 et 5 avec la 6 montre que les tailles des phases à base de silicate de chaux (zones grises foncées) sont plus importantes pour une vitesse de refroidissement entre Tᵢ et Tₚ de 1 °C/min que pour une vitesse de 10°C/min.

### • Influence de la température de palier Tₚ sur la taille des phases à base de silicate de chaux

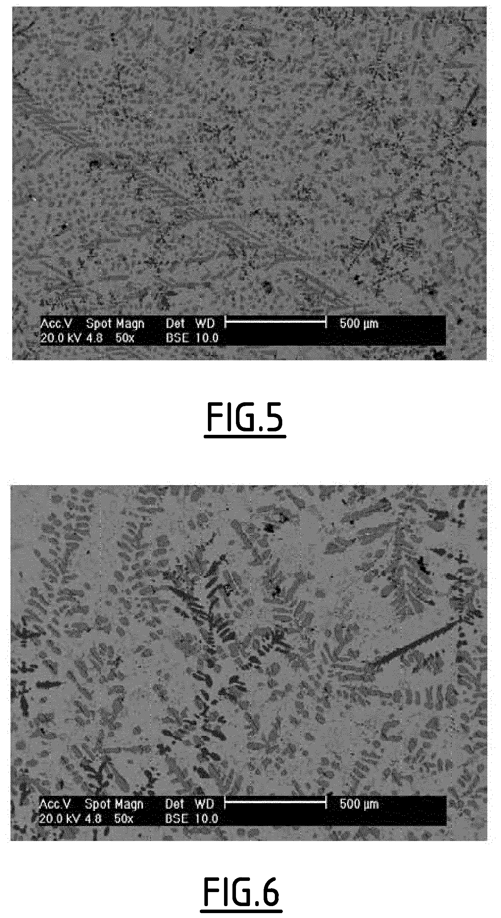

La comparaison des figures 1, 3 et 5 avec les figures 2, 4 et 6 montre que, à vitesse de refroidissement identique, les tailles des phases à base de silicate de chaux sont similaires pour toutes les températures de palier Tₚ testées (1200, 1300 et 1400°C), avec des tailles légèrement supérieures à 1300°C.

### • Influence de la vitesse de refroidissement entre Tᵢ et Tₚ et de la température de palier Tₚ sur la composition chimique du laitier refroidi et sur celle des différentes phases minérales

Le tableau 2 donne les résultats des analyses élémentaires globales (c'est-à-dire sur l'ensemble des phases et non pour une phases spécifique) effectuées sur chacune des micrographies représentées aux figures 1 à 6. Les teneurs sont équivalentes avec des variations un peu plus importantes pour les quantités de silice, de chaux et d'oxyde de fer, dues aux prélèvements de laitier qui sont différents pour chaque essai.

**Tableau 2: Analyse élémentaire globale sur les micrographies des figures 1 à 6 (en % massique)**

| Eléments | MgO | Al₂O₃ | SiO₂ | P₂O₅ | CaO | MnO | Fe₂O₃ | TiO₂ |
|---|---|---|---|---|---|---|---|---|
| Essai | 7,8 | 1,3 | 7,5 | 1,2 | 43 | 3,4 | 35,7 | 0 |
| 2 | 7,5 | 1,3 | 9,1 | 1,3 | 47,4 | 3,6 | 29,2 | 0,6 |
| 1 | 8 | 2 | 7,7 | 1,1 | 44,3 | 3,3 | 33,6 | 0 |
| 6 | 9,1 | 1,5 | 7,9 | 1,2 | 41,9 | 3,6 | 34,8 | 0 |
| 3 | 8,5 | 2,3 | 11,2 | 1,7 | 41,3 | 2,8 | 32,2 | 0 |
| 8 | 8,7 | 2,2 | 9,9 | 2,2 | 40,1 | 2,9 | 33,4 | 0,6 |
| 7 | 7,8 | 1,3 | 7,5 | 1,2 | 43 | 3,4 | 35,7 | 0 |
| Moyenne | 8,3 | 1,8 | 8,9 | 1,4 | 43 | 3,3 | 33,1 | 0,2 |

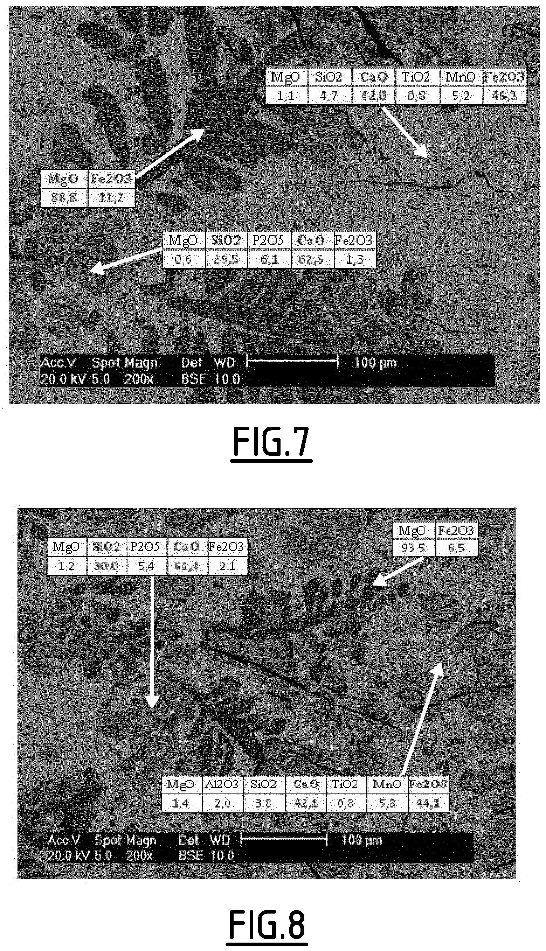

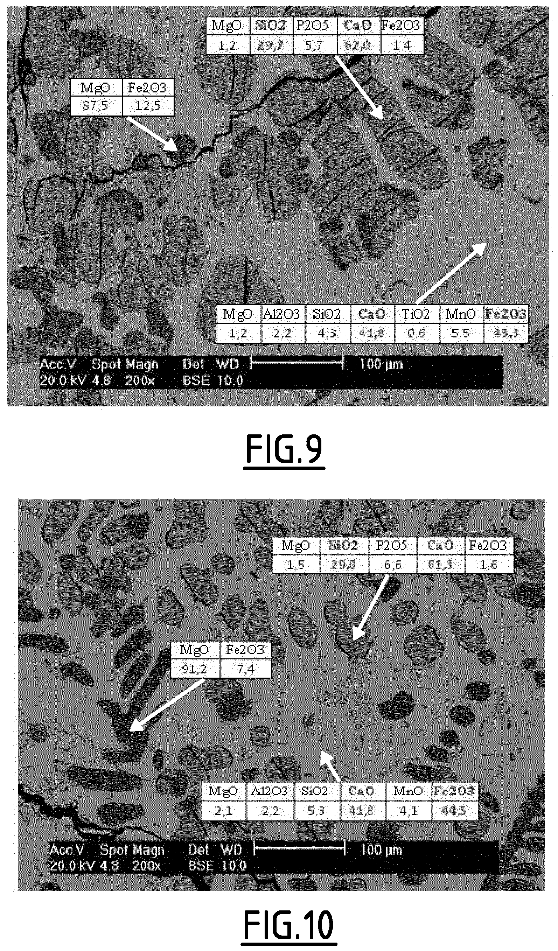

La figure 7 montre une micrographie de l'échantillon obtenu lors de l'essai 3, à plus fort grossissement. Des analyses EDS ont été effectuées sur chaque phase afin de déterminer leur composition.
Les zones les plus sombres correspondent en majorité à de l'oxyde de magnésium, avec un peu d'oxyde de fer. Il s'agit de phases de type periclase.
Les zones grises correspondent à des phases à base de silicates de chaux. Il s'agit de phases C2S. Le phosphore est présent dans cette phase (sous forme d'oxyde de phosphore).
Enfin les zones blanches correspondent à des phases à base de ferrite de chaux, qui comprennent, en plus de la ferrite de chaux, un peu de silice, d'alumine, d'oxyde de manganèse et des traces d'oxyde de magnésium et de titane.
Pour les échantillons des autres essais, les zones observées sont similaires et ont une composition équivalente, comme illustré aux figures 8, 9 et 10. De manière plus générale, d'après les analyses EDS effectuées sur les différents échantillons, aucune différence de composition chimique globale ou ponctuelle (c'est-à-dire sur une zone correspondant à une phase minérale spécifique) n'a été observée.

Les diffractogrammes aux rayons X des échantillons montrent que les principales phases présentes dans les échantillons sont la srebrodolskite, la magnétite, la wollastonite, la periclase, l'enstatite ainsi qu'une phase d'oxyde de manganèse contenant un peu d'oxyde de fer.

### • Influence de la durée de l'étape b) (palier) sur la taille des phases à base de silicate de chaux

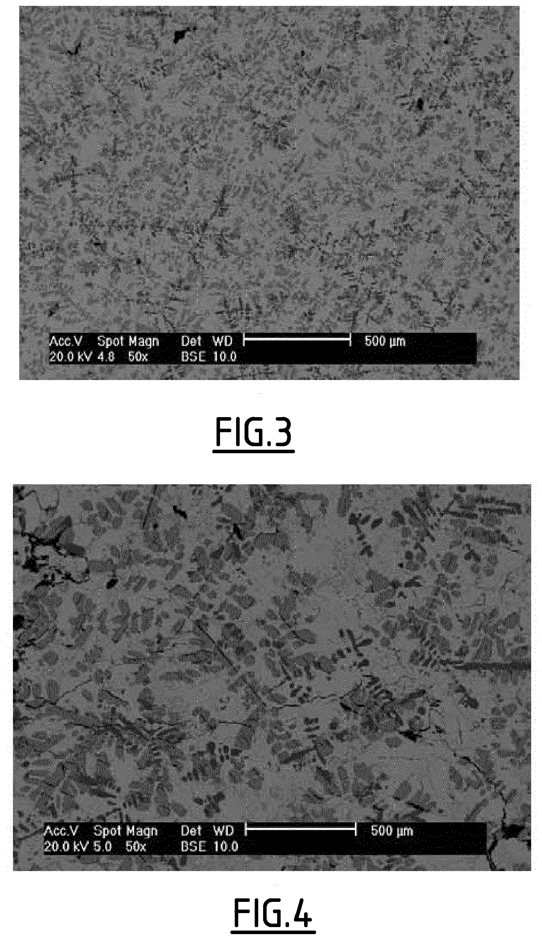

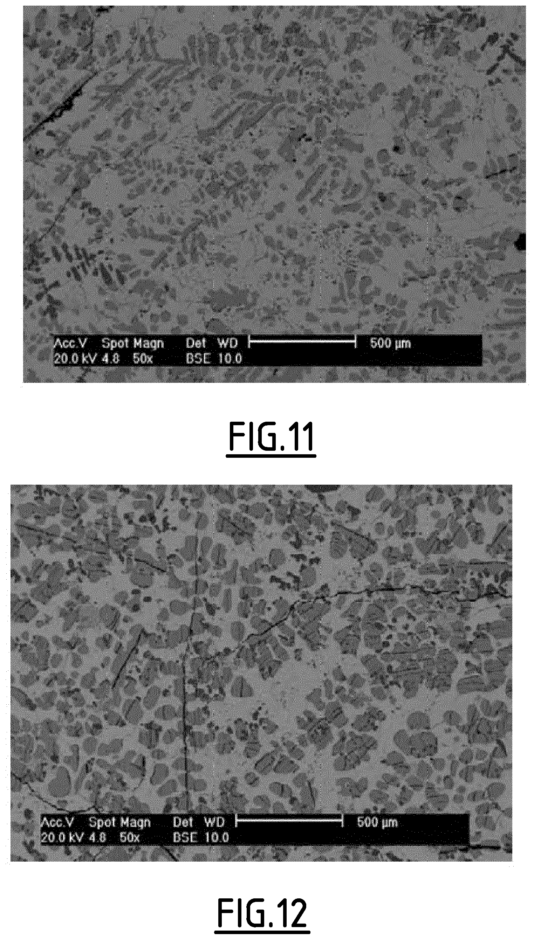

La comparaison des figures 11 et 12 montre que pour un temps de palier de recristallisation de 24 heures, les phases à base de silicate de chaux ont une plus grande taille que pour un temps de palier de recristallisation de 5 heures. Par contre, les tailles de ces phases sont similaires pour un palier de 1 ou 5 heures (comparaison des figures 4 et 11).

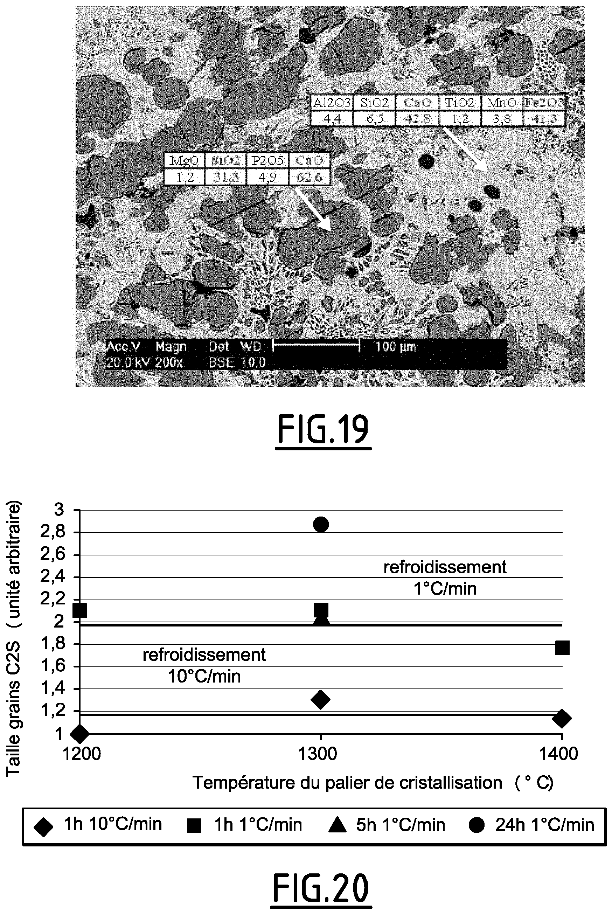

La figure 20 fournit les tailles des phases à base de silicate de chaux, avec une unité arbitraire où la valeur 1 correspond à la taille moyenne des phases à base de silicate de chaux de l'essai 1, en fonction de la température de palier Tₚ, aux deux vitesses de refroidissement testées (1 ou 10°C/min) avec des durées de l'étape b) (palier) de 1, 5 ou 24 heures.

### • Influence de l'aiout de silice sur la taille des phases à base de silicate de chaux et sur la composition chimique des différentes phases minérales

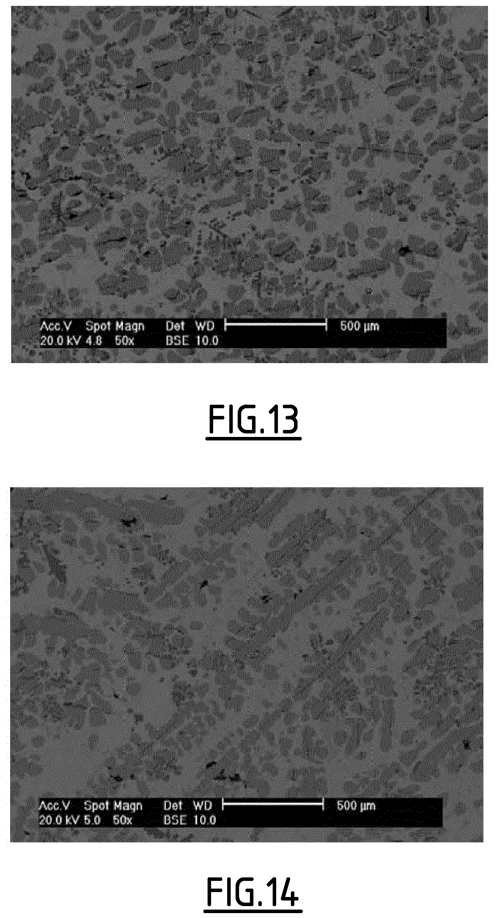

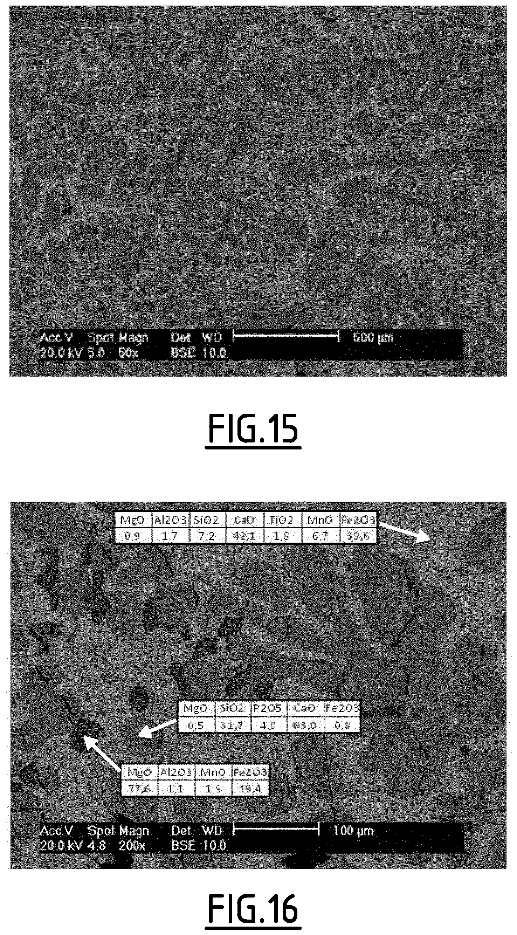

La comparaison des figures 13 et 14 avec la figure 12 montre que l'ajout de 5% en masse de silice, pour des étapes b) (palier) de 5h et 10h, permet d'obtenir des tailles de phases à base de silicate de chaux comparables à celles obtenues sans ajout de silice, pour une étape b) de 24h. La figure 15 montre que pour un ajout de 10% en masse de silice, il y a formation d'une structure eutectoïde.

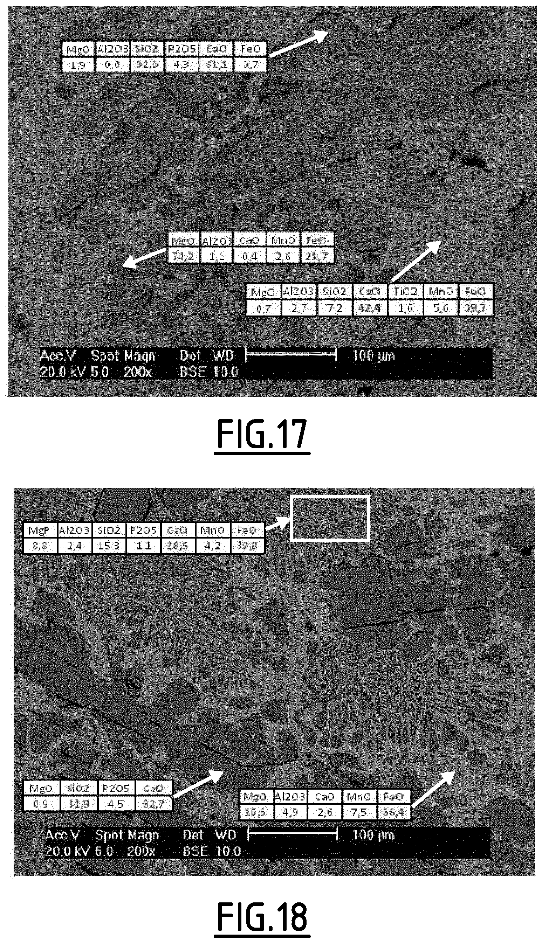

Les phases grises observées sont toujours à base de silicate de chaux (de type C2S) sur tous les échantillons, comme le montre la figure 16, avec les ferrites de chaux en gris clair et la periclase en gris très foncé. Les analyses des autres échantillons avec ajout de silice sont représentées aux figures 17 et 18.

Les diffractogrammes aux rayons X des échantillons préparés par un procédé comprenant l'ajout de silice montrent que les principales phases présentes dans les échantillons sont la magnetite, la srebrodolskite, la periclase, l'enstatite ainsi qu'une phase contenant en majorité de l'oxyde de manganèse avec des traces de magnésie.

### • Influence de la température initiale Tᵢ sur la taille des phases à base de silicate de chaux et sur la composition chimique des différentes phases minérales

La comparaison des figures 19 et 17 montre que les tailles de phases à base de silicate de chaux et les compositions des différentes phases sont comparables pour des températures initiales Tᵢ de respectivement 1500 et 1600°C.

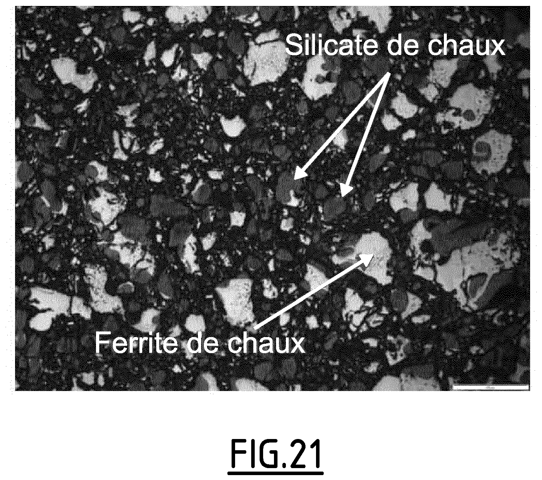

Le laitier refroidi suivant l'essai 9 a été broyé au mortier (broyage manuel sans contrôle de la granulométrie). La figure 21 montre que de nombreux grains à base de silicate de chaux ou à base de ferrite de chaux sont parfaitement séparés. Ceci montre qu'avec un broyage permettant d'obtenir une granulométrie plus homogène et plus fine, les phases à base de silicate de chaux et à base de ferrite de chaux peuvent très facilement être séparées.

## Revendications

1. Procédé de traitement de laitier d'aciérie de conversion comprenant les étapes de :
a) refroidissement d'un laitier d'aciérie de conversion d'une température initiale Tᵢ comprise entre 1500 et 1600°C à une température de palier Tₚ comprise entre 1200 et 1400°C, étant entendu que :
- la vitesse moyenne de refroidissement de la température initiale Tᵢ à la température de palier Tₚ est inférieure ou égale à 10°C par minute, et
- la vitesse maximale de refroidissement de la température initiale Tᵢ à la température de palier Tₚ est inférieure à 20°C par minute, puis
c) refroidissement du laitier d'aciérie de conversion de la température de palier Tₚ à une température finale T_{f} inférieure à 1200°C,
ce par quoi se forment des phases à base de silicate de chaux de taille moyenne supérieure à 30 µm et des phases à base de ferrite de chaux,
d) broyage du laitier d'aciérie de conversion obtenu après refroidissement,
e) séparation des phases à base de silicate de chaux et des phases à base de ferrite de chaux.

2. Procédé de traitement de laitier d'aciérie de conversion selon la revendication 1, dans lequel, dans l'étape a), la vitesse moyenne de refroidissement de la température initiale Tᵢ à la température de palier Tₚ est inférieure à 5°C par minute.

3. Procédé de traitement de laitier d'aciérie de conversion selon la revendication 2, dans lequel, la vitesse moyenne de refroidissement de la température initiale Tᵢ à la température de palier Tₚ est de l'ordre de 1°C par minute.

4. Procédé de traitement de laitier d'aciérie de conversion selon l'une quelconque des revendications 1 à 3, comprenant préalablement à l'étape a), une étape a₀) de maintien du laitier d'aciérie de conversion à la température initiale Tᵢ pendant 1 à 48 heures.

5. Procédé de traitement de laitier d'aciérie de conversion selon l'une quelconque des revendications 1 à 4, comprenant entre les étapes a) et c) une étape b) de maintien du laitier d'aciérie de conversion à la température de palier Tₚ pendant 1 à 48 heures.

6. Procédé de traitement de laitier d'aciérie de conversion selon l'une quelconque des revendications 1 à 5, comprenant préalablement à l'étape a) ou pendant l'une des étapes a), b) si elle est présente, ou c), une étape d'ajout d'un matériau à base de silice au laitier d'aciérie de conversion.

7. Procédé de traitement de laitier d'aciérie de conversion selon la revendication 6, dans lequel le matériau à base de silice est ajouté dans des proportions massiques inférieures ou égales à 10% en poids par rapport au poids de laitier d'aciérie de conversion.

8. Procédé de traitement de laitier d'aciérie de conversion selon la revendication 7, dans lequel le matériau à base de silice est ajouté dans des proportions massiques de l'ordre de 5% en poids par rapport au poids de laitier d'aciérie de conversion.

9. Procédé de traitement de laitier d'aciérie de conversion selon l'une quelconque des revendications 1 à 8, dans lequel l'étape e) est une séparation magnétique, par lixiviation ou par flottation.

## Patentansprüche

1. Verfahren zur Behandlung einer Konverterstahlschlacke, die Schritte umfassend:
a) Abkühlen einer Konverterstahlschlacke einer Ausgangstemperatur Tᵢ zwischen 1500 und 1600°C auf eine Lagertemperatur Tₚ zwischen 1200 und 1400°C, vorausgesetzt, dass:
- die mittlere Abkühltemperatur von der Ausgangstemperatur Tᵢ auf die Lagertemperatur Tₚ kleiner oder gleich 10°C pro Minute ist, und
- die maximale Abkühlungsgeschwindigkeit von der Ausgangstemperatur Tᵢ bis zur Lagertemperatur Tₚ kleiner als 20°C pro Minute ist, dann
c) Abkühlen der Konverterstahlschlacke von der Lagertemperatur Tₚ auf eine Endtemperatur T_{f} kleiner als 1200°C,
wodurch sich Phasen auf Basis von Kalksilikat mittlerer Größe größer als 30 µm und Phasen auf Basis von Kalkferrit bilden,
d) Mahlen der erhaltenen Konverterstahlschlacke nach dem Abkühlen,
e) Trennen der Phasen auf Basis von Kalksilikat und der Phasen auf Basis von Kalkferrit.

2. Verfahren zur Behandlung der Konverterstahlschlacke nach Anspruch 1, bei dem im Schritt a) die mittlere Geschwindigkeit der Abkühlung von der Ausgangstemperatur Tᵢ auf die Lagertemperatur Tₚ kleiner als 5°C pro Minute ist.

3. Verfahren zur Behandlung der Konverterstahlschlacke nach Anspruch 2, bei dem die mittlere Geschwindigkeit der Abkühlung von der Ausgangstemperatur Tᵢ auf die Lagertemperatur Tₚ in der Größenordnung von 1°C pro Minute ist.

4. Verfahren zur Behandlung der Konverterstahlschlacke nach einem beliebigen der Ansprüche 1 bis 3, vor dem Schritt a) einen Schritt a₀) des Haltens der Konverterstahlschlacke auf der Ausgangstemperatur Tᵢ während 1 bis 48 Stunden umfassend.

5. Verfahren zur Behandlung der Konverterstahlschlacke nach einem beliebigen der Ansprüche 1 bis 4, zwischen den Schritten a) und c) einen Schritt b) des Haltens der Konverterstahlschlacke auf der Lagertemperatur Tₚ während 1 bis 48 Stunden umfassend.

6. Verfahren zur Behandlung der Konverterstahlschlacke nach einem beliebigen der Ansprüche 1 bis 5, vor dem Schritt a) oder während einem der Schritte a), b) wenn vorhanden, oder c) einen Schritt des Zufügens eines Materials auf der Basis von Kieselerde zu der Konverterstahlschlacke umfassend.

7. Verfahren zur Behandlung der Konverterstahlschlacke nach Anspruch 6, bei dem das Material auf der Basis von Kieselerde in Massenanteilen kleiner oder gleich 10 Gew.-% in Bezug auf das Gewicht der Konverterstahlschlacke hinzugefügt wird.

8. Verfahren zur Behandlung der Konverterstahlschlacke nach Anspruch 7, bei dem das Material auf der Basis von Kieselerde in Massenanteilen kleiner oder gleich 5 Gew.-% in Bezug auf das Gewicht der Konverterstahlschlacke hinzugefügt wird.

9. Verfahren zur Behandlung der Konverterstahlschlacke nach einem beliebigen der Ansprüche 1 bis 8, bei dem der Schritt e) eine magnetische Trennung, eine Laugentrennung oder eine Flotationstrennung ist.

## Claims

1. Method for treating basic oxygen furnace slag comprising steps of:
a) cooling basic oxygen furnace slag from an initial temperature Tᵢ of between 1500 and 1600° to a plateau temperature Tₚ of between 1200 and 1400°C, on the understanding that:
- the mean cooling rate from the initial temperature Tᵢ to the plateau temperature Tₚ is equal to or lower than 10°C per minute; and
- the maximum cooling rate from the initial temperature Tᵢ to the plateau temperature Tₚ is less than 20°C per minute; then
c) cooling the basic oxygen furnace slag from the plateau temperature Tₚ to a final temperature T_{f} lower than 1200°C;
whereby lime silicate phases are formed having a mean size larger than 30 µm and lime ferrite phases;
d) milling the basic oxygen furnace slag obtained after cooling;
e) separating the lime silicate phases and lime ferrite phases.

2. Method for treating basic oxygen furnace slag according to claim 1, wherein at step a) the mean cooling rate from the initial temperature Tᵢ to the plateau temperature Tₚ is less than 5°C per minute.

3. Method for treating basic oxygen furnace slag according to claim 2, wherein the mean cooling rate from the initial temperate Tᵢ to the plateau temperature Tₚ is in the order of 1°C per minute.

4. Method for treating basic oxygen furnace slag according to any of claims 1 to 3 comprising, prior to step a), a step a₀) to hold the basic oxygen furnace slag at the initial temperature Tᵢ for 1 to 48 hours.

5. Method for treating basic oxygen furnace slag according to any of claims 1 to 4 comprising, between steps a) and c), a step b) to hold the basic oxygen furnace slag at the plateau temperature Tₚ for 1 to 48 hours.

6. Method for treating basic oxygen furnace slag according to any of claims 1 to 5 comprising, prior to step a) or during one of steps a), b) if present or c), a step to add a silica material to the basic oxygen furnace slag.

7. Method for treating basic oxygen furnace slag according to claim 6, wherein the silica material is added in weight proportions equal to or lower than 10 % by weight relative to the weight of the basic oxygen furnace slag.

8. Method for treating basic oxygen furnace slag according to claim 7, wherein the silica material is added in weight proportions in the order of 5 % by weight relative to the weight of the basic oxygen furnace slag.

9. Method for treating basic oxygen furnace slag according to any of claims 1 to 8, wherein step e) is magnetic separation, via leaching or via flotation.
